# EUROPÄISCHE PATENTANMELDUNG

(11) **EP 0 916 850 A1**
(43) Veröffentlichungstag der Anmeldung: **19.05.1999**
(21) Anmeldenummer: 97810866.0
(22) Anmeldetag: 13.11.1997
(51) Int. Cl.: F04D 29/08, F04D 1/06, F16J 15/48

(54) **Gehäuse für Aggregate mit einem Fluid von hohem Druck**

(71) Anmelder: Sulzer Pumpen AG, 8404 Winterthur (CH)
(72) Erfinder: Meuter, Paul, 8474 Dinhard (CH)
(74) Vertreter: Heubeck, Bernhard

(57) **Zusammenfassung**

Mit der Erfindung ist ein Gehäuse (1) mit einem Deckel (2) gezeigt, welcher mit einer Wellendichtung (3) gegen einen Wellenteil (4) abgedichtet ist. Ein Anpressring (10) bildet mit einer zylindrischen Innenfläche (Z1) vom Gehäuse (1) und mit einer zylindrischen Aussenfläche (Z2) von einem ringförmigen Deckelteil (8) jeweils eine Nut, in die eine Hochdruckdichtung (11, 12) eingelegt ist. Passende Federn sind am Deckel ausgebildet. Durch ein Anpressen des Anpressringes (10) unter Innendruck (13) zum Deckel hin werden die Hochdruckdichtungen (11, 12) mit einer der Fläche vom Anpressring entsprechenden Kraft in der Richtung der Wellenachse zusammengepresst und zum radialen Dichten gegen die zylindrischen Flächen (Z1, Z2) gezwungen. Ein primäres Zusammenpressen der Hochdruckdichtungen (11, 12) kann durch den Deckel (2) hindurch mit einer auf den Anpressring (10) wirkenden Zugvorrichtung (15) erzeugt werden.

## Beschreibung

Die Erfindung handelt von einem Gehäuse für Aggregate mit einem Fluid von hohem Druck mit einem Gehäusedeckel, der mit einer Wellendichtung gegen einen Wellenteil abgedichtet ist.

Solche Gehäuse werden bei Armaturen und Fördereinheiten, wie beispielsweise Pumpen, Turbinen, Kompressoren, Schaltelementen benötigt, wenn auf der Innenseite ein Fluid mit hohem Druck anliegt. Ein Beispiel für eine derartige Aggregate ist mit den Kesselspeisewasserpumpen (Topfgehäuse) "HPT 320" der Firma Sulzer Pumpen AG, CH-8404 Winterthur verwirklicht.

Sobald elastische Nebendichtungen wie O-Ringe wegen zu hohen Drücken und/oder Temperaturen nicht mehr zwischen Gehäusen und Deckeln einsetzbar sind und mit Feder und Nut und zusammengepressten Hochdruckdichtungen gearbeitet werden muss, bestehen zusätzliche Probleme in der Ausrichtung eines Gehäusedeckels. Zum einen müssen enorme Druckkräfte, die am Deckel anliegen, auf das Gehäuse übertragen werden und zum anderen sollte der Abdichtungsdruck an der Hochdruckdichtung unter allen Betriebsbedingungen ausreichend angepasst sein, ohne die Ausrichtung des Deckels mit einer hindurchgeführten Welle zum Gehäuse zu verändern.

Aufgabe der Erfindung ist es, diese Situation zu verbessern. Diese Aufgabe wird mit den Kennzeichen vom Anspruch 1 gelöst, indem der deckelseitige Teil zum Wellenteil hin als Ringkörper mit einer zylindrischen Aussenfläche ausgeführt ist, indem der Deckel im Raum zwischen der zylindrischen Aussenfläche und einer zylindrischen Innenfläche vom Gehäuse einen dem hohen Innendruck ausgesetzten und in der Richtung der Wellenachse beweglichen Anpressring aufweist, indem zwischen Anpressring und der zylindrischen Innenfläche vom Gehäuse sowie zwischen Anpressring und der zylindrischen Aussenfläche vom Ringkörper eine statische Hochdruckdichtung eingebaut ist, und indem in der Richtung der Wellenachse gesehen die Fläche vom Anpressring zu den Flächen der statischen Hochdruckdichtungen so bemessen ist, dass unter dem hohen Innendruck der Anpressring ein radiales Anpressen und Dichten der Hochdruckdichtungen an den zylindrischen Flächen bewirkt.

Eine solche Anordnung hat den Vorteil, dass die Kraftübertragung vom Deckel zum Gehäuse unabhängig von der Spannbewegung zum Zusammenpressen von statischen Hochdruckdichtungen zwischen Deckel und Gehäuse ist. Durch diese Entkoppelung ergibt sich als weiterer Vorteil, dass zur Kraftübertragung vom Deckel auf das Gehäuse schlanke Konstruktionen verwendet werden können, die grosse Flansche, welche durch Schmieden und Bearbeiten unnötig verteuernd wirken, vermeiden. Ausserdem ist mit einem am Gehäuse zentrierbaren und unter dem Innendruck fest anliegenden Deckel ein genaueres Positionieren von Wellendichtung, Wellenlagerung und Gehäuseeinbauten zum Wellenteil möglich. Dabei ist zunächst unerheblich, ob die Welle dreht oder wie eine Kolbenstange verwendet wird. Der auf den Anpressring wirkende Innendruck bestimmt das Komprimieren der Hochdruckdichtungen, welches unabhängig von der Verbindung zwischen Deckel und Gehäuse ist.

In den abhängigen Ansprüchen 2 bis 11 sind weitere Verbesserungen der Erfindung aufgezeigt. So ist es vorteilhaft die Bewegung zwischen Anpressring und Deckel durch Anschläge zu begrenzen, um bei einem grossen Flächenverhältnis von Anpressring zu Dichtungsquerschnitt auch noch Dichtungsmaterialien zu verwenden, die bei zu hohem Druck zerstört würden. Auf diese Weise ist es möglich, die Flächenpressung σ beispielsweise auf einen Wert zwischen 25 und 200 N/mm² über eine mit dem Durchfahren eines Spiels begrenzte Volumenänderung des Dichtungsmaterials zu beschränken.

Durch die zweifache Dichtung vom Anpressring zu der zylindrischen Innenfläche am Gehäuse und zu der zylindrischen Aussenfläche am Ringkörper des Deckels, kann ein Zwischenraum zwischen Anpressring und Deckel geschaffen werden, der sogar durch den Deckel hindurch zur Atmosphäre belüftet sein kann. Somit ist es möglich, eine von aussen betätigbare Zugeinrichtung ohne weitere Dichtungen auf den Anpressring einwirken zu lassen, um eine primäre Verspannung der Hochdruckdichtungen zu erreichen. Ein Beispiel für eine derartige Zugeinrichtung sind mehrere gleichmässig verteilte Dehnschrauben, die in Sacklöcher am Anpressring eingreifen. Dabei sind die Dehnschrauben so zwischen der Hochdruckdichtung mit dem kleinen und der Hochdruckdichtung mit dem grossen Durchmesser verteilt, dass annähernd gleiche spezifische Flächenpressungen für eine primäre Dichtung zu den zylindrischen Dichtflächen entstehen.

Neben Armaturen sich axial verschiebenden oder drehenden Wellen ist eine typische Anwendungsmöglichkeit bei Kesselspeisewasserpumpen mit Hochdruckdichtungen. Durch die Entkoppelung der Dichtung von der Aufnahme für die Kraftübertragung sind Verbindungen im Bereich hoher Drücke und/oder hoher Temperaturen möglich, bei denen die wesentliche Kraftübertragung vom Deckel unter Innendruck auf das Gehäuse nicht durch Schrauben oder Bolzen, sondern durch Festanschläge erfolgen kann. Verschlüsse ähnlich einem Bajonettverschluss mit sich überdeckenden Festanschlägen sind ebenso wie Verschlüsse mit geteilten Einlegeringen möglich.

Als statische Hochdruckdichtungen mit beispielsweise annähernd quadratischem Querschnitt sind Werkstoffe wie Reingrafit möglich, die nach Bedarf mit einer Stützmatrix aus Metall versehen sein können. Auf diese Weise sind Anwendungen für ein Fluid mit Temperaturen über 220°C und Drücken über 500 bar möglich.

Im folgenden wird die Erfindung anhand von Ausführungsbeispielen beschrieben. Es zeigen:
- Fig. 1: Schematisch einen Ausschnitt aus einer Kesselspeisewasserpumpe aus dem Stand der Technik;
- Fig. 2: schematisch einen Ausschnitt für eine erfindungsgemässe Anordnung von einem Gehäuse mit einem Deckel, durch den eine Welle geführt ist;
- Fig. 3: schematisch einen vergrösserten Ausschnitt von Fig. 2 mit einer primär vorgespannten Hochdruckdichtung;
- Fig. 4: schematisch einen Ausschnitt für eine Anwendung der Erfindung bei einer Kesselspeisewasserpumpe; und
- Fig. 5: schematisch eine gleiche Anwendung wie im Beispiel von Fig. 4, jedoch mit einer anderen Befestigung vom Deckel am Gehäuse.

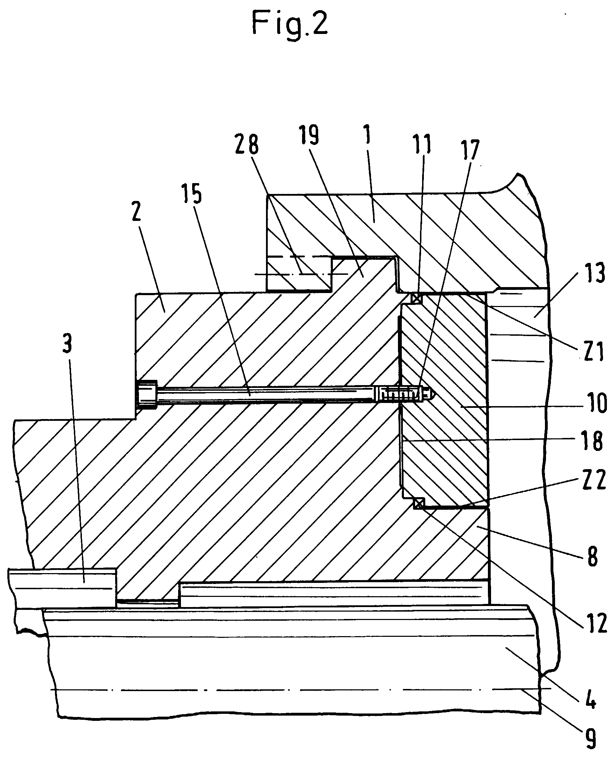

In den Figuren 2 bis 5 sind Gehäuse 1 mit einem Deckel 2 gezeigt, welcher mit einer Wellendichtung 3 gegen einen Wellenteil 4 abgedichtet ist. Ein Anpressring 10 bildet mit einer zylindrischen Innenfläche Z1 vom Gehäuse 1 und mit einer zylindrischen Aussenfläche Z2 von einem ringförmigen Deckelteil 8 jeweils eine Nut, in die eine Hochdruckdichtung 11, 12 eingelegt ist. Passende Federn sind am Deckel ausgebildet. Durch ein Anpressen des Anpressringes 10 unter Innendruck 13 zum Deckel hin werden die Hochdruckdichtungen 11, 12 mit einer der Fläche vom Anpressring entsprechenden Kraft in der Richtung der Wellenachse zusammengepresst und zum radialen Dichten gegen die zylindrischen Flächen Z1, Z2 gezwungen. Ein primäres Zusammenpressen der Hochdruckdichtungen 11, 12 kann durch den Deckel 2 hindurch mit einer auf den Anpressring 10 wirkenden Zugvorrichtung 15 erzeugt werden.

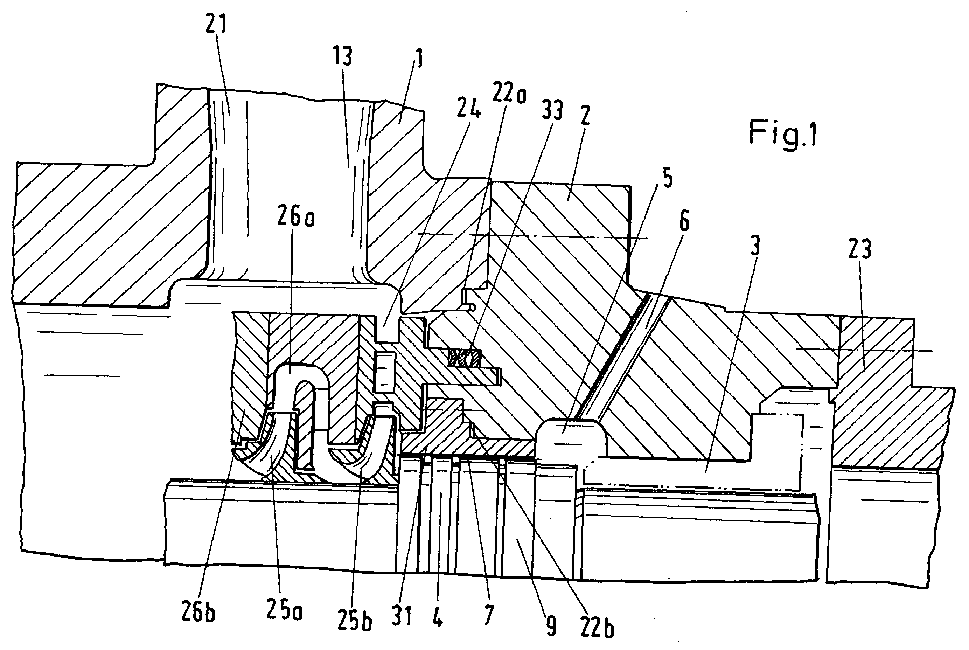

In Fig. 1 (Stand der Technik) ist eine Speisewasserpumpe herkömmlicher Bauart gezeigt. Ein unter einem hohen Innendruck 13 stehendes Pumpengehäuse 1 mit Austrittsleitung 21, Umlenkkörpern 26a, 26b und Austrittsspirale 24 ist mit einem Deckel 2 verschlossen, der durch Anpressschrauben über eine Hochdruckdichtung 22a mit dem Gehäuse 1 zusammengepresst ist. Am Deckel 2 ist ein Lagergehäuse 23 zentriert, welches eine Wellenlagerung (hier nicht gezeigt) aufnimmt. Die Welle 4 ist mit ihrer Wellenachse 9 durch die Wellenlagerung ausgerichtet und trägt die rotierenden Teile der Maschine (Kreiselpumpe), d.h. Laufräder 25a, 25b und den rotierenden Teil einer Wellendichtung 3. Der Deckel 2 besitzt zur Welle hin eine auswechselbare Büchse 31, die über eine statische Dichtung 22b gegen den Deckel 2 gedichtet ist. Hinter der Büchse 31 schliesst gegen aussen ein Raum 5 mit tieferem Druck an. Dadurch, dass dieser Raum 5 eine Entlastungsleitung 6 zu einem tieferen Druckniveau aufweist, entsteht eine Leckage zwischen Büchse 31 und Wellenteil 4, die durch ein äusserst geringes Spiel in einem so erzeugten Drosselspalt 7 klein gehalten wird. Der Vorteil einer solchen Entlastung besteht darin, dass die Wellendichtung 3 gegen einen kleineren Druck dichten muss und dass mit dem Durchmesserunterschied des Wellenteils 4 in dem Raum 5 mit dem Entlastungsdruck ein Ausgleichskolben entsteht, der beim Ausgleich der Axialschübe vom rotierenden Wellenteil verwendbar ist.

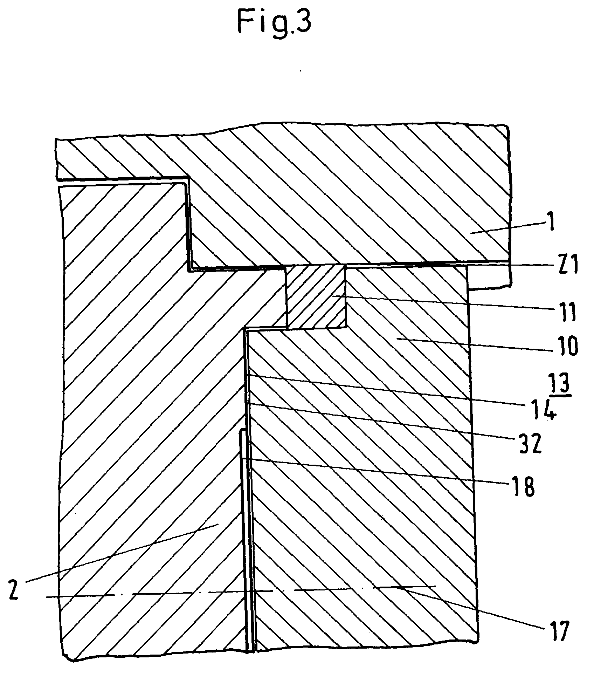

In Fig. 2 und 3 ist das Prinzip der Erfindung dargestellt. Das Gehäuse 1 ist über einen unterbrochenen Ring wie ein Nockenverschluss 19 mit dem Deckel 2 verriegelt, wobei Halteschrauben 28 dafür sorgen, dass keine Verdrehung stattfindet und dass der Deckel 2 unter dem Gehäuseinnendruck spielfrei auf einer festen Schulter des Gehäuses 1 aufliegt. Die eigentliche Zentrierung des Deckels 2 findet mit einem als Feder vorstehenden Vorsprung an der zylindrischen Innenfläche Z1 des Gehäuses statt, sodass die Ausrichtung des Deckels nur über metallische Führungsflächen erfolgen kann. Die eigentliche Dichtung erfolgt durch statische Hochdruckdichtungen 11, 12, die mittels eines Anpressringes 10, auf dem der Innendruck 13 lastet, in axialer und radialer Richtung zusammengepresst sind. Dabei dichtet die Hochdruckdichtung 11 bei der Gehäusefläche Z1 gegen drei Körper, nämlich gegen das Gehäuse 1, gegen den Anpressring 10 und gegen den Deckel 2, während die andere Hochdruckdichtung 12 zwar auch in axialer und radialer Richtung angepresst ist, aber nur gegen zwei Körper, nämlich gegen den Deckel 2 und gegen den Anpressring 10 dichtet. Der Deckel besitzt einen vorgezogenen Ringkörper 8 mit zylindrischer Aussenfläche Z2, um dem Anpressring 10 unter dem Innendruck 13 eine Verschiebung in der Richtung der Wellenachse 9 zu ermöglichen. Zwischen dem Deckel 2 und Anpressring 10 besteht im Bereich zwischen den beiden Hochdruckdichtungen 11, 12 ein Zwischenraum 18, der zur Atmosphäre offen ist, um eine Druckdifferenz am Anpressring zu erzeugen, die zu einem vorbestimmten Anpressen der Dichtungen 11, 12 führt. Über eine Zugeinrichtung 15 in Form von Dehnschrauben, die in Sacklöcher 17 am Anpressring 10 eingreifen, wird ein primäres Anpressen der Dichtungen 11, 12 nach der Montage des Deckels 2 erreicht. Wie in Fig. 3 ersichtlich, besteht bei dem primären Anpressen zwischen Anpressring 10 und Deckel 2 ein Spiel 32 in axialer Richtung. Mit wachsendem Innendruck 13 werden daher die Hochdruckdichtungen 11, 12 entsprechend dem Flächenverhältnis vom Anpressring 10 zu den Dichtungen 11, 12 weiter komprimiert, um ein sicheres Dichten zu erreichen. Um die Hochdruckdichtungen 11, 12 vor Überbelastung zu schützen, ist das Spiel 32 durch Anschläge 14 am Deckel 2 begrenzt. Der Querschnitt der Hochdruckdichtungen 11, 12 ist so ausgelegt, beispielsweise quadratisch, dass ein sicheres radiales Anpressen erfolgt. Die Wellendichtung 3 in Fig. 2 muss gegen den vollen Innendruck 13 dichten.

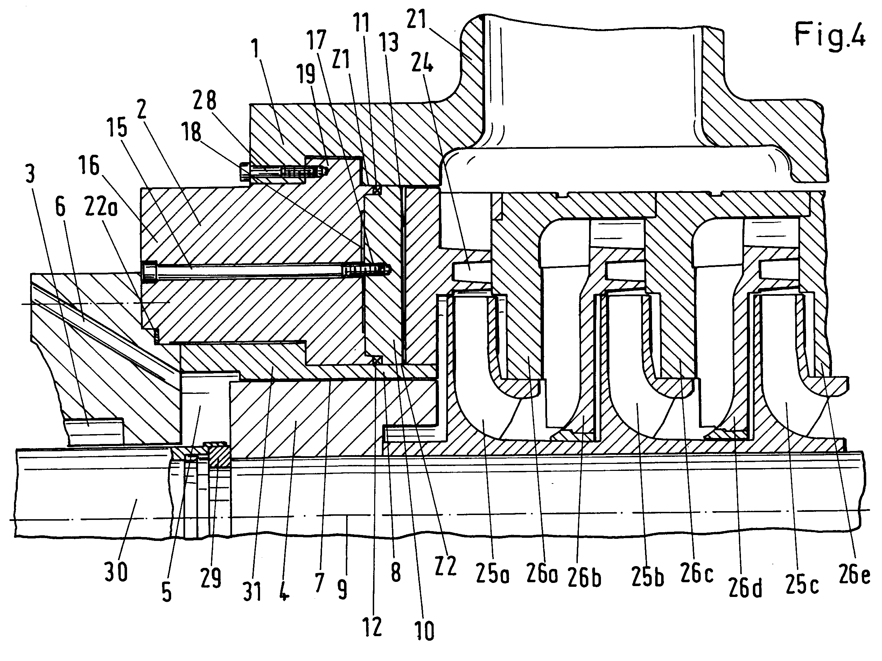

In Fig. 4 ist die Anwendung bei einer Kesselspeisewasserpumpe gezeigt, wobei im Gegensatz zu Fig. 2 der Ringkörper 8 mit der zylindrischen Aussenfläche Z2 als separate und am Deckel 2 befestigte Büchse 31 ausgeführt ist und die daran radial anliegende Hochdruckdichtung 12 ebenfalls gegen drei Körper, nämlich gegen Büchse 31, Anpressring 10 und Deckel 2 dichten muss. Der Deckel 2 ist mit einer Art Nockenverschluss 19 und durch Halteschrauben 28 mit dem Gehäuse 1 verbunden. Der Wellenteil 4 bildet mit der Büchse 31 einen Drosselspalt 7 zu einem Raum 5, der über eine Entlastungsleitung 6 mit einem tieferen Druck, als der Innendruck 13 beträgt, verbunden ist. Der niedrigere Entlastungsdruck und der kleinere Durchmesser des Gehäuses der Wellendichtung 3 gestatten es, eine Trennung des Gehäuses vorzunehmen, und dieses über eine statische Dichtung 22a und über Anpressschrauben (nicht gezeigt) mit dem Deckel 2 zu verbinden. Ein eingelegter, geteilter Ring 29, der über eine Wellenhülse 30 gesichert ist, übernimmt Druckkräfte in der Richtung der Wellenachse 9. Die Wellendichtung 3 muss nur gegen einen Entlastungsdruck dichten. Der Deckel 2 benötigt nur einen geringen Aussendurchmesser und ist als Tragring 16 ausgeführt. Dehnschrauben 15, die in Sacklöcher 17 in den am Anpressring 10 geschraubt sind und so den unter dem Innendruck 13 variablen Zwischenraum überbrücken, müssen so tief versenkt sein, dass sie mit ihren Köpfen nirgends stören, wenn der Anpressring 10 am Deckel 2 aufliegt. Ausserdem müssen sie gegenüber dem Anpressring 10 gegen Drehung gesichert sein, was mit einer in ihrer Festigkeit beschränkten und der Betriebstemperatur angepassten Klebeverbindung im Gewindesackloch 17 am Anpressring 10 möglich ist. Fig. 4 zeigt weiterhin Laufräder 25a, 25b, 25c auf der Welle und mit einer Austrittsspirale 24 zusammengesteckte Umlenkkörper 26a, 26b, 26c, 26d, 26e, die zur Kompensation von Wärmeausdehnungen auf der zylindrischen Aussenfläche Z2 am Ringkörper 8 geführt sind. Die Austrittspirale 24 mündet in das Gehäuse 1, von dem das Fluid über eine Austrittsleitung 21 weggeführt wird.

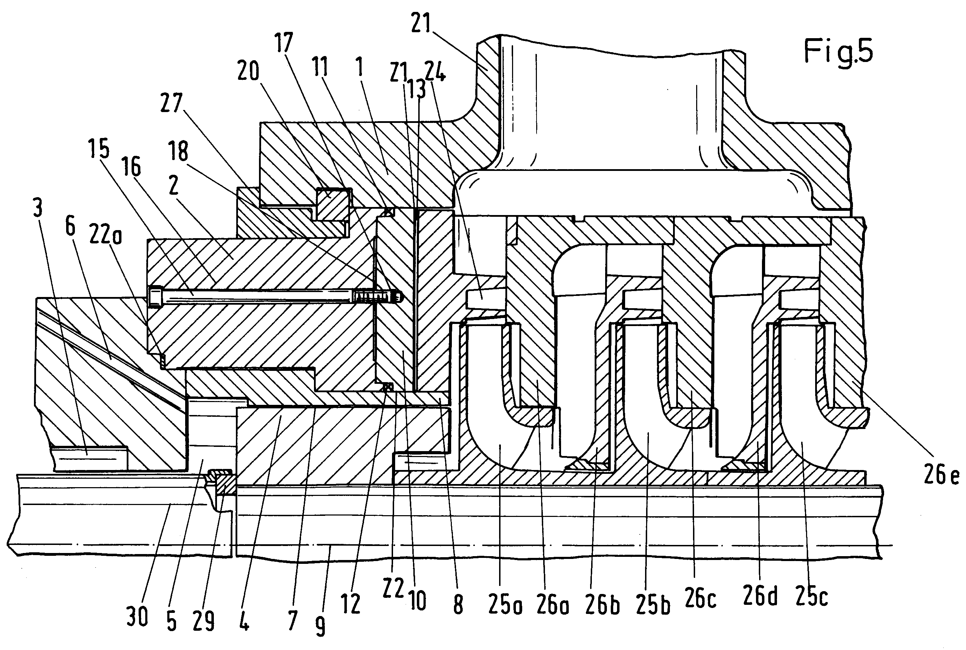

Fig. 5 entspricht mit fast allen Details der Anordnung von Fig. 4. Einzig die Befestigung zwischen Deckel 2 und Gehäuse 1 ist konstruktiv anders gelöst. Zwischen Gehäuse 1 und Deckel 2 ist ein geteilter Ring 20 eingelegt, der über einen Haltering 27 in einer Nut im Gehäuse 1 gesichert ist und der die Druckkräfte vom Deckel 2 auf das Gehäuse 1 überträgt, ohne dass ein Spiel oder der elastische Bereich einer Hochdruckdichtung durchfahren werden muss. Die Flächenpressung σ an den Hochdruckdichtungen ergibt sich aus dem Verhältnis der in axialer Richtung projezierten Fläche des Anpressrings 10 zu den Flächen der Hochdruckdichtungen 11, 12. Die Flächenpressung σ kann auf diese Weise ein Mehrfaches des Innendruckes 13 betragen. Eine Überbeanspruchung der Hochdruckdichtungen 11, 12 wird wie in Fig. 3 gezeigt, durch ein vorbestimmtes Spiel 32 und durch Festanschläge 14 verhindert.

## Patentansprüche

1. Gehäuse (1) für Aggregate mit einem Fluid von hohem Druck (13) mit einem Gehäusedeckel (2), der mit einer Wellendichtung (3) gegen einen Wellenteil (4) abgedichtet ist, dadurch gekennzeichnet, dass der deckelseitige Teil zum Wellenteil (4) hin als Ringkörper (8) mit einer zylindrischen Aussenfläche (Z2) ausgeführt ist, dass der Deckel (2) im Raum zwischen der zylindrischen Aussenfläche (Z2) und einer zylindrischen Innenfläche (Z1) vom Gehäuse (1) einen dem hohen Innendruck (13) ausgesetzten und in der Richtung der Wellenachse (9) beweglichen Anpressring (10) aufweist, dass zwischen Anpressring (10) und der zylindrischen Innenfläche (Z1) vom Gehäuse (1) sowie zwischen Anpressring (10) und der zylindrischen Aussenfläche (Z2) vom Ringkörper (8) eine statische Hochdruckdichtung (11, 12) eingebaut ist, und dass in der Richtung der Wellenachse (9) gesehen die Fläche vom Anpressring (10) zu den Flächen der statischen Hochdruckdichtungen (11, 12) so bemessen ist, dass unter dem hohen Innendruck (13) der Anpressring (10) ein radiales Anpressen und Dichten der Hochdruckdichtungen (11, 12) an den zylindrischen Flächen (Z1, Z2) bewirkt.

2. Gehäuse nach Anspruch 1, dadurch gekennzeichnet, dass die Bewegung vom Anpressring (10) in der Richtung der Wellenachse (9), die zum Anpressen der Hochdruckdichtungen (11, 12) führt, durch einen Anschlag (14) begrenzt ist.

3. Gehäuse nach Anspruch 1, dadurch gekennzeichnet, dass der Anschlag (14) gegenüber dem montierten Anpressring (10) ein Spiel aufweist, welches die Flächenpressung der Hochdruckdichtungen (11, 12) in der Richtung der Wellenachse (9) auf eine Flächenpressung 25 N/mm² < σ < 200 N/mm² beschränkt, wenn der Anpressring am Deckel (2) anliegt.

4. Gehäuse nach einem der Ansprüche 1 bis 3, dadurch gekennzeichnet, dass der Anpressring (10) durch eine von aussen betätigbare Zugeinrichtung (15) über die statischen Hochdruckdichtungen (11, 12) gegen den Deckel (2) verspannbar ist, um eine erste radiale Dichtwirkung zwischen Anpressring (10) und zylindrischer Aussenfläche (Z2) vom Ringkörper (8) sowie Anpressring und zylindrischer Innenfläche (Z1) vom Gehäuse zu bewirken.

5. Gehäuse nach Anspruch 4, dadurch gekennzeichnet, dass die Zugeinrichtung (15) aus Dehnschrauben besteht, die von aussen durch einen Tragring (16) hindurch in Sacklöcher (17) am Anpressring (10) eingreifen, wobei ein Zwischenraum (18), zwischen Anpressring (10) und Tragring (16) durch die Hochdruckdichtungen (11, 12) geschützt ist.

6. Gehäuse nach einem der Ansprüche 1 bis 5, dadurch gekennzeichnet, dass ein Raum (5) vor der Wellendichtung (3) eine Entlastungsleitung (6) zu einem tieferen Druck aufweist und über einen engen Drosselspalt (7), der für das Fluid zwischen Wellenteil (4) und Deckel (2) gebildet ist, mit dem Bereich verbunden ist, der dem eigentlichen hohen Innendruck (13) ausgesetzt ist.

7. Aggregat, beispielsweise Kesselspeisewasserpumpe, mit einem Gehäuse nach einem der Ansprüche 1 bis 6.

8. Aggregat nach Anspruch 7, dadurch gekennzeichnet, dass zwischen Deckel (2) und Gehäuse (1) eine Art Nockenverschluss (19) besteht, um die Druckkräfte in der Richtung der Wellenachse (9) vom Deckel (2) auf das Gehäuse (1) zu übertragen.

9. Aggregat nach Anspruch 7, dadurch gekennzeichnet, dass zwischen Deckel (2) und Gehäuse ein geteilter Ring (20) eingelegt ist, um die Druckkräfte in der Richtung der Wellenachse (9) vom Deckel (2) auf das Gehäuse (1) zu übertragen.

10. Aggregat nach einem der Ansprüche 7 bis 9, dadurch gekennzeichnet, dass die statischen Hochdruckdichtungen (11, 12) aus zusammenpressbaren Werkstoffen wie zum Beispiel aus Reingrafit bestehen.

11. Aggregat nach einem der Ansprüche 7 bis 10, dadurch gekennzeichnet, dass die Hochdruckdichtungen (11, 12) aus temperatur- und druckfesten Werkstoffen wie zum Beispiel aus edelstahlverstärktem Reingrafit bestehen, die bei hohen Temperaturen beispielsweise bei 220°C und mehr und bei hohen Drücken beispielsweise über 500 bar einsetzbar sind.
